# EUROPEAN PATENT APPLICATION

(11) **EP 4 461 829 A1**
(43) Date of publication of application: **13.11.2024**
(21) Application number: 22918828.9
(22) Date of filing: 21.12.2022
(51) Int. Cl.: C21D 8/02, C21D 9/46, C22C 18/00, C22C 18/04, C22C 38/00, C22C 38/60, B23K 11/11, B23K 11/16, C23C 2/06, C23C 2/26

(54) **WELDED JOINT**

(30) Priority: 06.01.2022 JP 2022001139
(71) Applicant: NIPPON STEEL CORPORATION, Chiyoda-ku Tokyo 100-8071 (JP)
(72) Inventor: MITSUNOBU, Takuya, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2022/047151
(87) International publication number: WO 2023/132244

(57) **Abstract**

Provided is a welded joint comprising a plurality of steel sheets stacked together, a spot weld having a nugget j oining the plurality of steel sheets, and a pressure weld and heat affected zone formed around the nugget, and a separation part positioned around the pressure weld, wherein one or more of the plurality of steel sheets is a plated steel sheet comprising a base steel sheet and a plating layer formed on at least a surface corresponding to a stacking surface of the plurality of steel sheets of surfaces of the base steel sheet, the plating layer at the separation part at an outside of the heat affected zone has a predetermined chemical composition, and at the plating layer of the separation part of a region up to 500 µm from an end of the pressure weld, a ratio of an area ratio of an η phase with respect to a total of area ratios of the η phase and Γ phase is 10 to 100%.

## Description

### FIELD

The present invention relates to a welded j oint, more particularly relates to a welded joint obtained by spot welding a plated steel sheet.

### BACKGROUND

The steel sheet used in automobiles, etc., requires excellent weldability. In the assembly of auto bodies and attachment of parts and other processes, spot welding is mainly utilized, but in particular in spot welding of galvanized steel sheets with each other or spot welding of galvanized steel sheet and nonplated steel sheet, it is necessary to suppress liquid metal embrittlement (LME) cracking. This phenomenon is the cracking occurring by the action of the tensile stress occurring due to welding at places where zinc converted to a liquid phase by the weld heat input penetrates to the inside of the steel sheet along the crystal grain boundaries to cause embrittlement. In spot welding, if such LME cracking occurs, the strength of the welded joint can no longer be secured, and therefore use of the galvanized steel sheet sometimes is obstructed.

In relation to this, PTL 1 teaches to deal with such LME cracking by improving the method of spot welding. More specifically, PTL 1 teaches that by continuing to press and hold the weld electrodes after finishing running current across the weld electrodes (extending the holding time Ht after welding) and adjusting the holding time Ht after welding as a function of the total sheet thickness "t" of the welded member, it is possible to cause the melted Zn plating to solidify before releasing the electrodes and as a result keep the melted Zn plating from entering the crystal grain boundaries of the steel sheet at locations with high weld residual stress and thereby suppress cracking.

PTL 2 teaches to stop cracking by controlling the plating structure near a spot weld after spot welding. More specifically, PTL 2 describes a spot welded member, comprising a spot weld formed by holding a sheet stack of multiple steel sheets between a pair of electrodes and spot-welding the sheet stack, wherein at least one of the multiple steel sheets is a high-strength zinc-based plated steel sheet having a tensile strength of 780 MPa or more, the high-strength zinc-based plated steel sheet having a plating with an Al content of 0.5% or more by mass, and wherein a heat shock region of the spot weld outwardly extending from an edge of a corona bond area includes a plated layer including an FeAl alloy layer having an average thickness of 0.3 µm or more and a zinc-based plated layer having an average thickness of 2.0 µm or more on the FeAl alloy layer at an interface between a base steel sheet of the high-strength zinc-based plated steel sheet and the plating. Further, PTL 2 teaches that to suppress Zn penetration into the base steel sheet, it is important to make the Al content in the plating 0.5 mass% or more to thereby form a high melting point FeAl alloy layer at the interface of the steel sheet and the plating of the steel sheet by the heat input at the time of welding.

### [CITATIONS LIST]

### [PATENT LITERATURE]

[PTL 1] Japanese Unexamined Patent Publication No. 2017-047475
[PTL 2] WO 2020/130079

### SUMMARY

### [TECHNICAL PROBLEM]

PTLs 1 and 2 study suppression of LME cracking at a welded joint from the viewpoint of improving the spot welding method and controlling the plating structure near a spot weld after spot welding. However, PTLs 1 and 2 do not necessarily sufficiently study suppressing the occurrence of LME cracking at a welded joint in relation to the plating structure at a plated steel sheet before spot welding. Therefore, in the inventions described in these patent literatures, there was still room for improvement regarding enhancing the LME resistance.

Therefore, the present invention has as its object to provide a welded joint enabling suppression or reduction of occurrence of LME cracking at the time of spot welding by a novel constitution.

### [SOLUTION TO PROBLEM]

The inventors engaged in studies to suppress or reduce the occurrence of LME cracking at the time of producing a welded joint by spot welding focusing on in particular the structure of the plating layer at a plated steel sheet used for the welded j oint. As a result, the inventors discovered that by using a plated steel sheet provided with a plating layer including Al in a relatively small amount while suitably controlled in Al concentration distribution, it is possible to improve the plating layer structure of the part susceptible to LME cracking at the time of spot welding and in turn possible to remarkably improve the LME resistance of the welded joint and thereby completed the present invention.

The present invention able to achieve the above object is as follows:
(1) A welded joint comprising
   a plurality of steel sheets stacked together,
   a spot weld having a nugget joining the plurality of steel sheets, and a pressure weld and heat affected zone formed around the nugget, and
   a separation part positioned around the pressure weld, wherein
   one or more of the plurality of steel sheets is a plated steel sheet comprising a base steel sheet and a plating layer formed on at least a surface corresponding to a stacking surface of the plurality of steel sheets of surfaces of the base steel sheet,
   the plating layer at the separation part at an outside of the heat affected zone has a chemical composition comprising, by mass%,
   Al: 0.10 to 1.50% and
   Fe: 0.01 to 2.00%,
   further comprising at least one of:
      Mg: 0 to 1.500%,
      Si: 0 to 1.000%,
      Ni: 0 to 1.000%,
      Ca: 0 to 4.000%,
      Sb: 0 to 0.500%,
      Pb: 0 to 0.500%,
      Cu: 0 to 1.000%,
      Sn: 0 to 1.000%,
      Ti: 0 to 1.000%,
      Cr: 0 to 1.000%,
      Nb: 0 to 1.000%,
      Zr: 0 to 1.000%,
      Mn: 0 to 1.000%,
      Mo: 0 to 1.000%,
      Ag: 0 to 1.000%,
      Li: 0 to 1.000%,
      La: 0 to 0.500%,
      Ce: 0 to 0.500%,
      B: 0 to 0.500%,
      Y: 0 to 0.500%,
      P: 0 to 0.500%, and
      Sr: 0 to 0.500% in a total of 5.000% or less, and
      a balance of Zn and impurities, and
      at the plating layer of the separation part of a region up to 500 µm from an end of the pressure weld, a ratio of an area ratio of an η phase with respect to a total of area ratios of the η phase and Γ phase is 10 to 100%.
(2) The welded joint according to the above (1), wherein the chemical composition comprises, by mass%, Al: 0.30 to 1.50% and, at the plating layer of the separation part of the region up to 500 µm from the end of the pressure weld, the ratio of the area ratio of the η phase with respect to the total of the area ratios of the η phase and Γ phase is 25 to 100%.
(3) The welded joint according to the above (1), wherein the chemical composition comprises, by mass%, Al: 0.30 to 1.50% and, at the plating layer of the separation part of the region up to 500 µm from the end of the pressure weld, the ratio of the area ratio of the η phase with respect to the total of the area ratios of the η phase and Γ phase is 40 to 100%.
(4) The welded joint according to any one of the above (1) to (3), wherein the plating layer is a hot dip galvanized (GI) layer.
(5) The welded joint according to any one of the above (1) to (4), wherein the plated steel sheet has a tensile strength of 780 MPa or more.

### [ADVANTAGEOUS EFFECTS OF INVENTION]

According to the present invention, it is possible to provide a welded joint enabling suppression or reduction of occurrence of LME cracking at the time of spot welding.

### BRIEF DESCRIPTION OF DRAWINGS

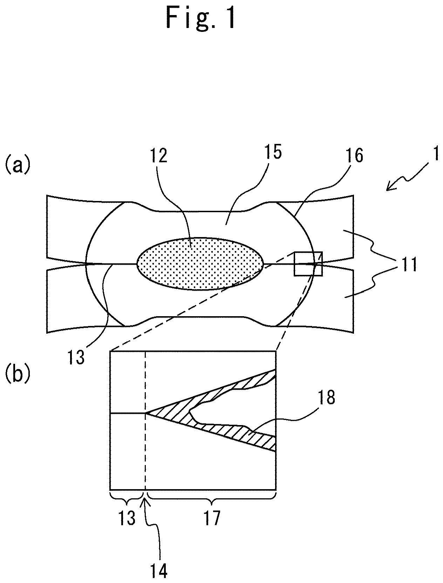

FIG. 1 is a view schematically showing a cross-section of a welded joint according to an embodiment of the present invention, wherein (a) is an overall view of a welded joint and (b) is an enlarged view of a pressure weld end and a separation part right outside the same.

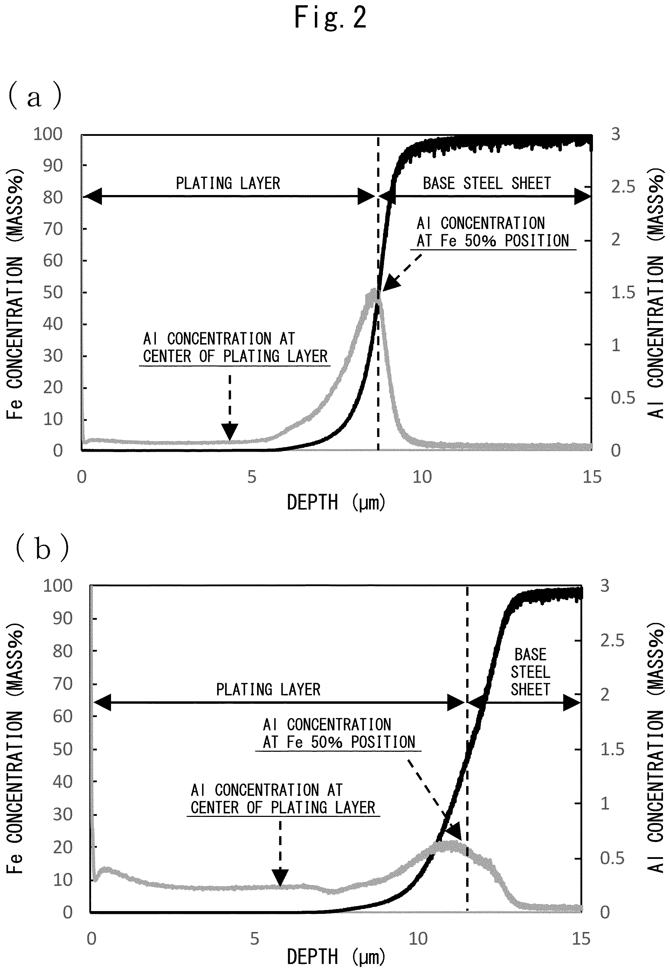

FIG. 2 is a view showing the results of analysis of a plated steel sheet by GDS, wherein (a) shows the results of analysis by GDS of an Al-containing plated steel sheet produced by a usual method and (b) shows the results of analysis by GDS of a plated steel sheet useful for use in a welded joint according to an embodiment of the present invention.

### DESCRIPTION OF EMBODIMENTS

### <Welded Joint>

The welded joint according to an embodiment of the present invention comprises
a plurality of steel sheets stacked together,
a spot weld having a nugget joining the plurality of steel sheets, and a pressure weld and heat affected zone formed around the nugget, and
a separation part positioned around the pressure weld, wherein
one or more of the plurality of steel sheets is a plated steel sheet comprising a base steel sheet and a plating layer formed on at least a surface corresponding to a stacking surface of the plurality of steel sheets of surfaces of the base steel sheet,
the plating layer at the separation part at an outside of the heat affected zone has a chemical composition comprising, by mass%,
Al: 0.10 to 1.50% and
Fe: 0.01 to 2.00%,
further comprising at least one of:
   Mg: 0 to 1.500%,
   Si: 0 to 1.000%,
   Ni: 0 to 1.000%,
   Ca: 0 to 4.000%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   P: 0 to 0.500%, and
   Sr: 0 to 0.500% in a total of 5.000% or less, and
   a balance of Zn and impurities, and
   at the plating layer of the separation part of a region up to 500 µm from an end of the pressure weld, a ratio of an area ratio of an η phase with respect to a total of area ratios of the η phase and Γ phase is 10 to 100%.

As explained above, in spot welding galvanized steel sheets together or spot welding galvanized steel sheet and nonplated steel sheet, it is necessary to suppress LME cracking. For example, when spot welding two or more steel sheets including at least one galvanized steel sheet stacked together to prepare a j oint, LME cracking sometimes occurs inside of the pressure weld (corona bond) formed at the outside of the weld metal (nugget) or its immediate outside, for example, the separation part positioned around the pressure weld (region where steel sheets are not joined). LME cracking occurs by the action of the tensile stress occurring due to welding, for example, the tensile stress caused by the squeezing force by the electrodes, expansion and contraction of the welds, springback at the time of release of the electrodes, and numerous other factors, at places where the zinc converted to a liquid phase by weld heat input at the time of spot welding penetrating to the inside of the steel sheet along the crystal grain boundaries causing embrittlement. Therefore, the inventors focused on the structure of the plating layer at a plated steel sheet so as to suppress or reduce such penetration of Zn to the inside of the steel sheet and engaged in studies to make the structure of the plating layer more suitable.

First, the inventors discovered that in a plating layer mainly comprised of zinc (Zn), adding a relatively small amount, i.e., a 0.10 to 1.50 mass% amount, of aluminum (Al) is effective from the viewpoint of suppressing or reducing the penetration of Zn to the inside of the steel sheet. If the amount of addition of Al becomes greater, the structure of the plating layer will approach a Zn-Al eutectic composition, and therefore the melting point of the plating layer will fall. For this reason, there is a strong possibility that excessive addition of Al would act disadvantageously from the viewpoint of suppressing or reducing the penetration of molten Zn to the inside of the steel sheet to improve the LME resistance. In particular, if adding Al in an amount greatly exceeding 1.50 mass%, the minus effect due to the excessive addition of Al will become remarkable and it is believed the effect of suppression of LME cracking due to Al addition would no longer be possible to be sufficiently manifested. In addition, the inventors discovered that by using a plated steel sheet controlled in the Al concentration distribution in a plating layer so that the ratio of the Al concentration at the center of the plating layer with respect to the Al concentration near the interface of the base steel sheet and plating layer, more specifically with respect to the Al concentration at the position of the plating layer where the Fe concentration is 50% of the base steel sheet, is 0.10 to 1.50, the plating structure at the separation part right outside the pressure weld changes due to the heat effect, etc., at the time of spot welding and occurrence of LME cracking in the surroundings of pressure weld is remarkably suppressed or reduced. Below, this will be explained in more detail with reference to the drawings.

FIG. 1 is a view schematically showing a cross-section of a welded joint according to an embodiment of the present invention, wherein (a) is an overall view of a welded joint and (b) is an enlarged view of a pressure weld end and a separation part right outside the same. First, referring to FIG. 1(a), the welded joint 1 according to an embodiment of the present invention is provided with two steel sheets 11 stacked together, a spot weld 16 having a nugget 12 joining these steel sheets 11, and a pressure weld 13 and heat affected zone 15 formed around the nugget 12, and a separation part 17 positioned around the pressure weld 13. In FIG. 1, as each of the two steel sheets 11, a plated steel sheet provided at both surfaces of a base steel sheet with a plating layer mainly comprised of Zn and with an Al concentration distribution controlled to within a predetermined range is used. In relation to this, referring to FIG. 1(b), at a separation part 17 right outside the pressure weld end 14, a plating layer 18 derived from the plating layer on the steel sheet 11 before spot welding is formed. According to an embodiment of the present invention, at the separation part 17 inside of the heat affected zone 15 positioned right outside the pressure weld end 14, the structure of the initial plating layer changes due to the heat effect, etc., at the time of spot welding and a plating layer 18 with a relatively high ratio of the η phase, more specifically the ratio of the area ratio of the η phase with respect to the total of the area ratios of the η phase and Γ phase of 10 to 100%, is formed. In the present invention, the "η phase" means a phase mainly comprised of Zn and containing Fe and other elements in a dissolved state, more specifically, a phase in which, by measurement using a scan electron microscope with an electron probe microanalyzer (SEM-EPMA), the Zn concentration is 97 atm% or more, the Fe concentration is 3 atm% or less, and other elements are 3 atm% or less. Similarly, the "Γ phase" means a phase which, by measurement using a SEM-EPMA, the Zn concentration is 87 atm% or more, the Fe concentration is 8 to 13 atm%, and other elements are 3 atm% or less. The change in structure of the plating layer is greatly affected by the chemical composition and structure at the initial plating layer before spot welding. In a Zn-based plating, alloying of the Zn in the plating layer progresses due to the heat input of the welding, and therefore the ratio of the Γ phase generally becomes higher and the ratio of the η phase becomes relatively low. However, according to an embodiment of the present invention, compared with the case of spot welding of conventional Zn-based plated steel sheet, a plating layer 18 with a relatively high ratio of the η phase is formed at the separation part 17 right outside the pressure weld 13. In turn, the penetration of molten Zn to the inside of the steel sheet at the time of spot welding is suppressed or reduced. As a result, the LME resistance of the obtained welded joint can be remarkably improved.

In FIG. 1, to facilitate understanding, the case of a welded joint obtained by stacking only two steel sheets 11 and further forming plating layers at both of the steel sheets 11 will be explained, but the welded joint according to an embodiment of the present invention is not necessarily limited to such a welded joint and can encompass various welded joints formed with plating layers 18 having predetermined amounts of the η phase at the separation parts 17 inside the heat affected zones 15. For example, in a welded joint such as described in FIG. 1 in which two steel sheets 11 are spot welded, just one of the steel sheets 11 may be a plated steel sheet. In this case, it is sufficient that there be a plating layer 18 present at the separation part 17 right outside the pressure weld 13 at least at the surface corresponding to the stacking surface of the two surfaces of the plated steel sheet. Only naturally, there may be a plating layer 18 and/or an initial plating layer relating to the plating layer 18 present at both surfaces. For example, if there is an initial plating layer relating to the plating layer 18 present at the opposite side to the stacking surface side of the steel sheet, i.e., the surface at the electrode side, at the initial plating layer at the electrode side as well, at the region inside the heat affected zone (for example, the contact part of the electrode and the steel sheet and its surroundings), the structure of the plating layer at the time of spot welding changes and a plating layer 18 with a relatively high ratio of the η phase is formed. For this reason, compared with the case where there is a plating layer 18 present at only the surface corresponding to the stacking surface of the steel sheet, the LME resistance can be further improved. In the case of a welded joint comprised of three or more steel sheets as well, similarly, various welded joints with plating layers 18 having predetermined amounts of the η phase formed at the separation parts 17 inside the heat affected zone 15 can be encompassed. For example, in a welded joint obtained by spot welding a set of three steel sheets 11, it is sufficient that there be a plating layer 18 present at the separation part 17 right outside the pressure weld 13 at least at the surface corresponding to the stacking surface of one or more of the steel sheets 11 of the three steel sheets 11. For example, if only the middle steel sheet 11 of three stacked steel sheets 11 is a plated steel sheet, there may be a plating layer 18 present at only the separation part 17 right outside the pressure weld 13 at one surface of the two surfaces of the plated steel sheet or there may be a plating layer 18 present at the separation part 17 right outside the pressure weld 13 of both surfaces. For example, there may be a plating layer 18 present at only the separation part 17 right outside the pressure weld 13 of some of the steel sheets 11 and there may be another Zn-based plating layer present at the separation part 17 right outside the pressure weld 13 of the other steel sheets 11. Such embodiments are also encompassed by the present invention. In this case, compared with the case of a welded joint with a plating layer 18 present at the separation part 17 right outside the pressure weld 13 of all of the steel sheets 11, the risk of LME cracking becomes higher at the surfaces where other Zn-based plating layers are present and there is a possibility of the joint strength falling somewhat, but the specific number and arrangement of steel sheets 11 formed with plating layers 18 having predetermined amounts of the η phase at the welded joint may be suitably determined considering the desired joint strength, etc.

Next, a plated steel sheet useful for use in a welded joint according to an embodiment of the present invention will be explained. FIG. 2 is a view showing the results of analysis of a plated steel sheet by GDS, wherein FIG. 2(a) shows the results of analysis by GDS of an Al-containing plated steel sheet produced by a usual method and FIG. 2(b) shows the results of analysis by GDS of a plated steel sheet useful for use in a welded joint according to an embodiment of the present invention. First, referring to FIG. 2(a), it will be understood that in an Al-containing plated steel sheet made by a usual method where a plating layer mainly comprised of Zn is made to contain Al in 0.20%, the Al concentration gradually rises the deeper the depth from the depth position 0 µm, corresponding to the plating surface, and the Al concentration has a relatively high peak near the interface of the base steel sheet and the plating layer, i.e., near the position of the plating layer where the Fe concentration is 50% of the base steel sheet. The peak of this Al concentration suggests that an Fe-Al barrier layer including an alloy of Fe and Al is formed at the interface of the base steel sheet and the plating layer. As clear from the fact that the peak of the Al concentration is relatively high, in an Al-containing plated steel sheet produced by a usual method, a large amount of Al in the plating layer is consumed for formation of the Fe-Al barrier layer whereby a relatively thick Fe-Al barrier layer is formed. For this reason, in FIG. 2(a), the Al concentration greatly decreased the more to the plating surface side from near the interface of the base steel sheet and the plating layer and then became a substantially constant low value. It will be understood that the Al concentration exhibits a low value of about 0.1% or so at the center of the plating layer, corresponding to the intermediate position between the position of the plating layer where the Fe concentration is 50% of the base steel sheet and the plating surface.

In contrast to this, referring to FIG. 2(b), it will be understood that in the plated steel sheet of FIG. 2(b), despite the plating layer having a similar Al content as the case of FIG. 2(a), the Al concentration near the interface of the base steel sheet and the plating layer is much lower compared with the case of FIG. 2(a). Therefore, in a plated steel sheet of FIG. 2(b), an Fe-Al barrier layer thinner than the case of FIG. 2(a) is formed. In relation to this, in FIG. 2(b), it will be understood that even the more to the plating surface side from near the interface of the base steel sheet and the plating layer, the Al concentration in the plating layer does not greatly decrease, but decreases relatively gently, then becomes a substantially constant value and that at the center of the plating layer, the Al concentration exceeds about 0.2% and exhibits an extremely high value of about 2 times or more compared with the case of FIG. 2(a). From the results of analysis by GDS of FIGS. 2(a) and (b), it is believed that in the plated steel sheet of FIG. 2(b), a large amount of Al in the plating layer is not consumed for formation of the Fe-Al barrier layer but remains as an Al phase in for example a dissolved state in the plating layer other than at the Fe-Al barrier layer. The inventors conducted further studies thinking that from the results of analysis by GDS of the plated steel sheets and the fact that the welded joint obtained by spot welding the plated steel sheet of FIG. 2(b) exhibited a higher LME resistance compared with the welded joint obtained by spot welding the plated steel sheet of FIG. 2(a) in experiments, an Al phase present in the plating layer other than the Fe-Al barrier layer plays an extremely important role in suppressing or reducing the penetration of molten Zn to the inside of a steel sheet at the time of spot welding. As a result, the inventors discovered that by controlling the amount of addition of Al as a whole to the relatively low amount of 1.50 mass% or less so as to suppress deterioration of the LME resistance due to the lowering of the melting point of the plating layer while controlling the ratio of the "Al concentration at center of plating layer"/"Al concentration at position of plating layer where Fe concentration is 50% of base steel sheet" when measuring the plating layer by GDS within a range of 0.10 to 1.50, it is possible to sufficiently manifest the effect due to addition of Al to the plating layer. Furthermore, the inventors discovered that by using such a plated steel sheet, at the time of spot welding, the structure of the initial plating layer changes at the separation part inside the heat affected zone right outside the pressure weld, more specifically at the separation part of the region up to 500 µm from the end of the pressure weld, a plating layer with a ratio of the area ratio of the η phase with respect to the total of the area ratios of the η phase and Γ phase of 10 to 100% is formed, and, in turn, penetration of molten Zn to the inside of the steel sheet at the time of spot welding can be remarkably suppressed or reduced. In addition to such improvement of the LME resistance, the inventors discovered that by the ratio of the η phase mainly comprised of Zn becoming relatively higher at the plating layer of the weld, the corrosion resistance of the weld can also be remarkably improved.

While not intending to be bound to any specific theory, in the welded joint according to an embodiment of the present invention, it is believed that the Al in the initial plating layer acts in the following way to suppress or reduce Zn converted to a liquid phase by the weld heat input at the time of spot welding from penetrating to the inside of the steel sheet along the crystal grain boundaries. If explained in more detail, first, in a plated steel sheet, it is believed that the Fe-Al barrier layer formed at the interface of the base steel sheet and the plating layer is relatively brittle, and therefore relatively easily fractures due to the stress applied to the steel sheet due to the squeezing force by electrodes, etc., at the time of spot welding. Zn melting at the time of spot welding directly contacts the base steel sheet due to such fracture of the Fe-Al barrier layer, and therefore the risk of the molten Zn penetrating to the inside of the steel sheet along the crystal grain boundaries rises. However, if using the plated steel sheet provided with a plating layer having an Al concentration distribution such as shown in FIG. 2, the Al present in a relatively large amount at parts of the plating layer other than the Fe-Al barrier layer directly contacts the base steel sheet along with Zn due to fracture of the Fe-Al barrier layer. In this case, it is believed that, due to the heat input at the time of spot welding, the Al in the plating layer reacts with the Fe in the base steel sheet to newly form an Fe-Al barrier layer and as a result the fractured Fe-Al barrier layer is repaired. That is, due to Al being present in a large amount in the plating layer other than at the Fe-Al barrier layer, at the time of spot welding, even if the Zn directly contacts the base steel sheet due to fracture of the Fe-Al barrier layer, etc., a new Fe-Al barrier layer is immediately formed at the fracture due to the Al present immediately close by. For this reason, the frequency and time by which the molten Zn directly contacts the base steel sheet are reduced and alloying of the Zn in the plating layer is suppressed, or such an alloying reaction is delayed, even due to heat input at the time of spot welding and, it is believed, a plating layer with a relatively high ratio of the η phase is formed at the region right outside the pressure weld compared with a spot weld of a conventional Zn-based plated steel sheet. Further, in relation to the formation of such a new Fe-Al barrier layer, it is possible to remarkably suppress or reduce the penetration of molten Zn to the inside of the steel sheet at the time of spot welding, and therefore it is believed it is possible to reliably suppress or reduce occurrence of LMC cracking. In the past, a plated steel sheet adding Al to a Zn-based plating layer has been known. However, the fact that by keeping the amount of Al of the plating layer as a whole relatively low considering the drop in melting point of the plating layer while on the other hand making the amount of Al in the plating layer other than at the Fe-Al barrier layer increase, it is possible to change the plating structure of the plated steel sheet at the separation part right outside the pressure weld to a structure with a relatively high ratio of the η phase and in turn possible to suppress or reduce the penetration of molten Zn to the inside of the steel sheet at the time of spot welding and further possible to improve the weld corrosion resistance has not been known in the past and was first clarified by the inventors this time.

Below, the component elements of the welded joint according to an embodiment of the present invention will be explained in more detail. In the following explanation, the "%" of the units of content of the elements, unless otherwise indicated, means "mass%". Further, in this Description, "to" showing a numerical range, unless otherwise indicated, is used in the sense including the numerical values described before and after it as the lower limit value and upper limit value.

### [Plated Steel Sheet]

In the welded joint according to an embodiment of the present invention, one or more of the plurality of steel sheets stacked together is a plated steel sheet comprising a base steel sheet and a plating layer formed on at least a surface corresponding to a stacking surface of the plurality of steel sheets of the surfaces of the base steel sheet. The plating layer of this plated steel sheet has the following chemical composition the same as the initial chemical composition before spot welding at the separation part at the outside of the heat affected zone.

### [Chemical Composition of Plating Layer]

### [Al: 0.10 to 1.50%]

Al is an element effective for suppressing molten Zn from penetrating to the inside of steel sheet along the crystal grain boundaries. To sufficiently obtain such an effect, the Al content is 0.10% or more. The Al content may also be 0.12% or more, 0.15% or more, 0.18% or more, 0.20% or more, 0.25% or more, 0.30% or more, 0.35% or more, 0.40% or more, more than 0.50%, 0.52% or more, 0.55% or more, more than 0.60%, 0.62% or more, 0.65% or more, or 0.70% or more. On the other hand, if excessively including Al, the composition of the plating layer becomes close to that of a Zn-Al eutectic composition, and therefore the melting point of the plating layer falls. For this reason, the Zn in the plating layer easily melts at the time of spot welding and LME cracking sometimes is promoted. Therefore, the Al content is 1.50% or less. The Al content may also be 1.45% or less, 1.40% or less, 1.30% or less, 1.20% or less, 1.10% or less, 1.00% or less, 0.90% or less, or 0.80% or less.

### [Fe: 0.01 to 2.00%]

Fe is, for example, an element which dissolves out from the base steel sheet into the plating bath or which, at the time of plating treatment, reacts with the Al to form an Fe-Al barrier layer at the interface of the base steel sheet and the plating layer and thus is unavoidably contained in the plating layer. For this reason, in an embodiment of the present invention, the Fe content in the plating layer becomes 0.01% or more. The Fe content may also be 0.04% or more, 0.05% or more, 0.10% or more, 0.15% or more, 0.20% or more, 0.25% or more, 0.30% or more, 0.40% or more or 0.50% or more. On the other hand, if the Fe content in the plating layer is too high, sometimes the Al in the plating layer bonds with the Fe or much of the Al is consumed for forming an Fe-Al barrier layer. As a result, sometimes the effect of addition of Al, i.e., the effect of addition of Al of suppression or reduction of direct contact between the molten Zn and base steel sheet when spot welding by the Al in the plating layer and thereby suppression of alloying of the Zn in the plating layer and suppression or reduction of occurrence of LME cracking can no longer be sufficiently exhibited. Therefore, the Fe content is 2.00% or less. The Fe content may also be 1.80% or less, 1.60% or less, 1.50% or less, 1.30% or less, 1.20% or less, 1.00% or less, 0.90% or less, 0.80% or less, 0.70% or less, or 0.60% or less.

The basic chemical composition of the plating layer is as explained above. Furthermore, the plating layer may optionally contain at least one of Mg: 0 to 1.500%, Si: 0 to 1.000%, Ni: 0 to 1.000%, Ca: 0 to 4.000%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, P: 0 to 0.500%, and Sr: 0 to 0.500%. These optional elements are included in a total of 5.000% or less from the viewpoint of sufficiently obtaining the actions and functions of the basic constituents forming the plating layer, in particular the Al. The optional elements may be included in a total of 4.500% or less, 4.000% or less, 3.500% or less, 3.000% or less, 2.500% or less, 2.000% or less, 1.500% or less, or 1.000% or less. Below, these optional elements will be explained in detail.

### [Mg: 0 to 1.500%]

Mg is an element effective for improving the corrosion resistance of the plating layer. The Mg content may be 0%, but to obtain such an effect, the Mg content is preferably 0.001% or more. The Mg content may also be 0.010% or more, 0.050% or more, or 0.100% or more. On the other hand, if excessively containing Mg, sometimes a large number of the brittle compound MgZn-based compounds is formed in the plating layer. These can become causes for a drop in workability. Therefore, the Mg content is preferably 1.500% or less. The Mg content may also be 1.200% or less, 1.000% or less, 0.800% or less, or 0.500% or less.

### [Si: 0 to 1.000%]

Si is an element effective for improving the corrosion resistance of the plating layer. The Si content may be 0%, but Si may also be contained in the plating layer in an amount of 0.0001% or more or 0.001% or more, if necessary. On the other hand, if excessively containing Si, sometimes the plating adhesion of the plating layer will fall. Therefore, the Si content is preferably 1.000% or less. The Si content may also be 0.800% or less, 0.500% or less, 0.100% or less, or 0.050% or less.

### [Ni: 0 to 1.000%]

Ni is an element effective for improving the corrosion resistance of the plating layer. The Ni content may be 0%, but to obtain such an effect, the Ni content is preferably 0.001% or more. The Ni content may also be 0.005% or more, 0.010% or more, or 0.020% or more. On the other hand, if excessively containing Ni, sometimes a large amount of intermetallic compounds will be formed and the corrosion resistance will fall. Therefore, the Ni content is preferably 1.000% or less. The Ni content may also be 0.800% or less, 0.600% or less, or 0.400% or less.

### [Ca: 0 to 4.000%]

Ca is an element effective for securing the wettability of the plating bath. The Ca content may be 0%, but to obtain such an effect, the Ca content is preferably 0.001% or more. The Ca content may also be 0.010% or more, 0.100% or more, or 1.000% or more. On the other hand, if excessively containing Ca, sometimes a large amount of hard intermetallic compounds will be formed in the plating layer, the plating layer will become brittle, and adhesion with the steel sheet will fall. Therefore, the Ca content is preferably 4.000% or less. The Ca content may also be 3.000% or less, 2.000% or less, or 1.500% or less.

### [Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, P: 0 to 0.500%, and Sr: 0 to 0.500%]

Sb, Pb, Cu, Sn, Ti, Cr, Nb, Zr, Mn, Mo, Ag, Li, La, Ce, B, Y, P, and Sr need not be included in the plating layer, but can be present in the plating layer in amounts of 0.0001% or more or 0.001% or more. These elements do not detrimentally affect the performance as a plated steel sheet if within the predetermined ranges of content. However, if the contents of the elements are excessive, sometimes the corrosion resistance will fall. Therefore, the contents of Sb, Pb, La, Ce, B, Y, P, and Sr are preferably 0.500% or less. For example, they may also be 0.300% or less, 0.100% or less, or 0.050% or less. Similarly, the contents of Cu, Sn, Ti, Cr, Nb, Zr, Mn, Mo, Ag, and Li are preferably 1.000% or less, for example, may be 0.800% or less, 0.500% or less, or 0.100% or less.

In the plating layer, the balance besides the above elements is comprised of Zn and impurities. The "impurities" in the plating layer are constituents, etc., entering during to various factors in the production process, such as raw materials, when producing the plating layer.

The chemical composition of the plating layer can be determined by dissolving the plating layer in an acid solution to which an inhibitor suppressing corrosion of the base steel sheet is added and measuring the obtained solution by ICP (high frequency inductively coupled plasma) spectroscopy.

The plating layer may be any plating layer having the above chemical composition. It is not particularly limited, but for example is preferably a hot dip galvanized (GI) layer. For example, if performing heat treatment for alloying, the Fe content in the plating layer becomes higher and, in the final plating layer, sometimes the desired chemical composition and ratio of the "Al concentration at center of plating layer"/"Al concentration at position of plating layer where Fe concentration is 50% of base steel sheet" cannot be obtained. Further, the thickness of the plating layer may, for example, be 3 to 50 µm. The amount of deposition of the plating layer is not particularly limited, but for example may be 10 to 170 g/m² per side. The amount of deposition of the plating layer is determined by dissolving the plating layer in an acid solution containing an inhibitor for suppressing corrosion of the base steel sheet and finding the change in weight from before to after the pickling.

### [Ratio of Area Ratio of η Phase at Plating Layer of Separation Part: 10 to 100%]

In an embodiment of the present invention, at the plating layer of the separation part of the region up to 500 µm from the end of the pressure weld, the ratio of the area ratio of the η phase with respect to the total of the area ratios of the η phase and Γ phase is 10 to 100%. The region up to 500 µm from the end of the pressure weld corresponds to a region inside of the heat affected zone, and therefore generally, at the plating layer inside of this region, alloying of Zn easily proceeds due to the heat input of the time of spot welding. In turn, at the plating layer, the ratio of the Γ phase becomes higher and the ratio of the η phase mainly comprised of Zn (Zn concentration 97 atm% pr more) becomes relatively low. However, according to an embodiment of the present invention, compared with the case of a spot weld of a conventional Zn-based plated steel sheet, a plating layer with a relatively high ratio of the η phase, specifically, as explained above, a plating layer with a ratio of the area ratio of the η phase with respect to the total of the area ratios of the η phase and Γ phase of 10% or more, is formed at the separation part right outside of the pressure weld, i.e., the separation part of the region up to 500 µm from the end of the pressure weld. The fact that the ratio of the η phase is relatively high can be said to suggest that alloying of Zn did not sufficiently proceed even due to the heat input of the spot welding, i.e., to suggest that direct contact of molten Zn and the base steel sheet is suppressed or reduced. In turn, penetration of molten Zn to the inside of the steel sheet at the time of spot welding is suppressed or reduced, and therefore the LME resistance of the obtained welded joint can be improved. Therefore, from the viewpoint of improving the LME resistance of the welded joint and further the weld corrosion resistance, the higher the ratio of the η phase in the plating layer at the separation part right outside the pressure weld the better. For example, the ratio of the area ratio of the η phase with respect to the total of the area ratios of the η phase and Γ phase is preferably 15% or more, more preferably 25% or more, most preferably 40% or more and, for example, may also be 50% or more, 60% or more, or 70% or more. The ratio of the η phase can be made to increase by making the Al content of the plating layer as a whole increase while applying the method of production of a plated steel sheet explained in detail later. For example, to make the ratio of the area ratio of the η phase with respect to the total of the area ratios of the η phase and Γ phase 25% or more or 40% or more, the Al content of the plating layer as a whole is preferably 0.30% or more. On the other hand, the upper limit can be suitably set in a range of 100% or less. For example, the ratio of the area ratio of the η phase with respect to the total of the area ratios of the η phase and Γ phase may be 95% or less, 90% or less, 85% or less, or 80% or less. Further, the structure of the plating layer at the separation part right outside of the pressure weld is mainly comprised of an η phase and Γ phase. While not particularly limited to this, the total of the area ratios of the η phase and Γ phase may be 70% or more or 80% or more. Similarly, the total of the area ratios of the η phase and Γ phase may be 100% or less, 95% or less, or 90% or less.

### [Method of Measurement of Ratio of Area Ratio of η Phase at Plating Layer of Separation Part]

The ratio of the η phase at the separation part of the region up to 500 µm from the end of the pressure weld is determined as follows: First, a cross-sectional sample of the spot weld is prepared, then a BSE image including the end of the pressure weld is obtained by a scan electron microscope with an electron probe microanalyzer (SEM-EPMA) and the end of the pressure weld of the spot weld and a region up to 500 µm from the end of the pressure weld toward the separation part (boundary part of pressure weld and separation part) are identified from the BSE image. Next, elemental analysis is conducted at the identified boundary part and the area ratio of the η phase and the area ratio of the Γ phase at the boundary part are identified. Specifically, the η phase is the phase where the Zn concentration is 97 atm% or more, the Fe concentration is 3 atm% or less, and the other impurities are 3 atm% or less and the Γ phase is the phase where the Zn concentration is 87 atm% or more, the Fe concentration is 8 to 13 atm% and the other impurities are 3 atm% or less. The field of the SEM image is 100 µm×100 µm. Similar elemental analysis is conducted for five different locations at the boundary part and the ratio of the area ratio of the η phase to the total of the area ratios of the η phase and Γ phase at each field is found. Finally, these are averaged to determine the ratio of the area ratio of the η phase to the total of the area ratios of the η phase and Γ phase.

### [Ratio of "Al Concentration at Center of Plating Layer"/"Al Concentration at Position of Plating Layer Where Fe Concentration is 50% of Base Steel Sheet": 0.10 to 1.50]

In an embodiment of the present invention, when measuring the plating layer at the separation part at the outside of the heat affected zone by glow discharge spectroscopy (GDS), the ratio of the "Al concentration at center of plating layer"/"Al concentration at position of plating layer where Fe concentration is 50% of base steel sheet" is preferably 0.10 to 1.50. By controlling the ratio of the "Al concentration at center of plating layer" and the "Al concentration at position of plating layer where Fe concentration is 50% of base steel sheet" when measured by GDS to within such a range, the effect due to addition of Al to the plating layer is sufficiently manifested and the ratio of the area ratio of the η phase to the total of the area ratios of the η phase and the Γ phase in the plating layer of the separation part of the region up to 500 µm from the end of the pressure weld at the time of spot welding can be reliably controlled to within a range of 10 to 100%. In the welded joint according to an embodiment of the present invention, the object of suppressing or reducing the occurrence of LME cracking at the time of spot welding can be achieved by controlling the chemical composition of the plating layer and the ratio of the η phase in the plating layer at the separation part right outside the pressure weld to within the ranges explained above. Therefore, the above requirement by GDS is not a technical feature essential for achieving the object of the present invention and is just one of the preferable means for reliably controlling the ratio of the η phase at the plating layer of the separation part to within the desired range. While not particularly limited, the ratio of the "Al concentration at center of plating layer"/"Al concentration at position of plating layer where Fe concentration is 50% of base steel sheet" may, for example, be 0.15 or more, 0.20 or more, 0.30 or more, 0.40 or more, or 0.50 or more. Similarly, the ratio of the "Al concentration at center of plating layer"/"Al concentration at position of plating layer where Fe concentration is 50% of base steel sheet" may be 1.40 or less, 1.30 or less, 1.20 or less, 1.10 or less, or 1.00 or less.

### [Method of Measurement of Ratio of "Al Concentration at Center of Plating Layer"/"Al Concentration at Position of Plating Layer Where Fe Concentration is 50% of Base Steel Sheet"]

The ratio of the "Al concentration at center of plating layer"/"Al concentration at position of plating layer where Fe concentration is 50% of base steel sheet" is determined in the following way. First, a plated steel sheet sample cut from a separation part at the outside of the heat affected zone of the welded joint to a 50 mm×50 mm size is obtained, then that plated steel sheet sample is measured by glow discharge spectroscopy (GDS) to obtain the Al concentration distribution from the surface of the plating layer to 100 µm in the depth direction. Next, the Al concentration at the depth position where the Fe intensity is 50% of the Fe intensity of the base steel sheet in GDS measurement (Fe intensity at depth 100 µm position from surface of plating layer of sample) is determined as the "Al concentration at position of plating layer where Fe concentration is 50% of base steel sheet". The distance from this depth position to the surface is defined as the thickness of the plating layer. The Al concentration by GDS at the 1/2 position of thickness of the plating layer is determined as the "Al concentration at center of plating layer" and, finally, the ratio of the "Al concentration at center of plating layer"/"Al concentration at position of plating layer where Fe concentration is 50% of base steel sheet" is determined.

### [Base Steel Sheet]

In an embodiment of the present invention, the base steel sheet for forming the above plating layer is not particularly limited and may be any suitable material, in particular a cold rolled steel sheet. For example, the base steel sheet may be a material having a chemical composition giving a tensile strength of the plated steel sheet of 780 MPa or more. In general, it is known that LME cracking remarkably occurs when spot welding steel sheet having a relatively high strength and that the higher strength the steel sheet is made, the higher the sensitivity to LME cracking tends to become. Therefore, in a welded j oint, if using a plated steel sheet having a high tensile strength of 780 MPa or more, the effect of suppression of LME cracking becomes particularly remarkable.

### [Preferable Chemical Composition of Base Steel Sheet]

The present invention, as explained above, has as its object to provide a welded joint enabling suppression or reduction of occurrence of LME cracking at the time of spot welding and achieves this object by making one or more of the plurality of stacked steel sheets a plated steel sheet provided with a plating layer at least at a surface corresponding to a stacking surface and controlling the plating layer so as to have a predetermined chemical composition at a separation part at the outside of the heat affected zone and by controlling the ratio of the area ratio of the η phase of the plating layer at the separation part of the region up to 500 µm from the end of the pressure weld to a range of 10 to 100% with respect to the total of the area ratios of the η phase and Γ phase. Therefore, it is clear that the chemical composition itself of the base steel sheet provided with the plating layer is not a technical feature essential in achieving the object of the present invention. Below, the preferable chemical composition of the base steel sheet relating to the plated steel sheet useful for use in the welded joint according to an embodiment of the present invention will be explained in detail, but the explanations are intended to simply illustrate the preferred chemical composition of a base steel sheet for a plated steel sheet having a tensile strength of 780 MPa or more in which occurrence of LME remarkably occurs when spot welding, i.e., a plated steel sheet where the effect of suppression of LME cracking is particularly remarkable. Therefore, the explanations are not intended to limit the present invention to one using a base steel sheet having such a specific chemical composition.

In an embodiment of the present invention, for example, the base steel sheet preferably has a chemical composition comprising, by mass%,
C: 0.01 to 0.50%,
Si: 0.01 to 3.50%,
Mn: 0.10 to 5.00%,
P: 0.100% or less,
S: 0.0300% or less,
N: 0.0100% or less,
O: 0 to 0.020%,
Al: 0 to 1.000%,
B: 0 to 0.010%,
Nb: 0 to 0.150%,
Ti: 0 to 0.20%,
Mo: 0 to 3.00%,
Cr: 0 to 2.00%,
V: 0 to 1.00%,
Ni: 0 to 2.00%,
W: 0 to 1.00%,
Ta: 0 to 0.10%,
Co: 0 to 3.00%,
Sn: 0 to 1.00%,
Sb: 0 to 0.50%,
Cu: 0 to 2.00%,
As: 0 to 0.050%,
Mg: 0 to 0.100%,
Ca: 0 to 0.100%,
Zr: 0 to 0.100%,
Hf: 0 to 0.100%,
REM: 0 to 0.10, and
a balance: Fe and impurities. Below, the elements will be explained in more detail.

### [C: 0.01 to 0.50%]

C is an element increasing the tensile strength inexpensively and an element important for controlling the strength of steel. To sufficiently obtain such an effect, the C content is preferably 0.01% or more. The C content may also be 0.05% or more, 0.08% or more, 0.09% or more, 0.10% or more, 0.11% or more, 0.12% or more, or 0.15% or more. On the other hand, if excessively containing C, sometimes a drop in elongation is invited. For this reason, the C content is preferably 0.50% or less. The C content may also be 0.40% or less, 0.35% or less, or 0.30% or less.

### [Si: 0.01 to 3.50%]

Si is an element acting as a deoxidizer and suppressing the precipitation of carbides in the cooling process during annealing of a cold rolled sheet. To sufficiently obtain such an effect, the Si content is preferably 0.01% or more. The Si content may also be 0.10% or more, 0.12% or more, 0.15% or more, 0.30% or more, or 0.80% or more. On the other hand, if excessively including Si, sometimes a drop in elongation is invited along with an increase in steel strength. For this reason, the Si content is preferably 3.50% or less. The Si content may also be 2.50% or less, 2.00% or less, or 1.50% or less.

### [Mn: 0.10 to 5.00%]

Mn is an element affecting the ferrite transformation of steel and an element effective for raising the strength. To sufficiently obtain such an effect, the Mn content is preferably 0.10% or more. The Mn content may also be 0.50% or more, 1.00% or more, or 1.50% or more. On the other hand, if excessively including Mn, sometimes a drop in elongation is invited along with an increase in steel strength. For this reason, the Mn content is preferably 5.00% or less. The Mn content may also be 4.00% or less, 3.00% or less, or 2.50% or less.

### [P: 0.100% or Less]

P is an element precipitating at the grain boundaries and promoting embrittlement of the steel. The P content is preferably as small as possible, and therefore ideally is 0%. However, excessive reduction of the P content sometimes invites a large increase in costs. For this reason, the P content may be 0.0001% or more and may be 0.001% or more or 0.005% or more. On the other hand, if excessively including P, as explained above, sometimes embrittlement of the steel is invited due to grain boundary segregation. Therefore, the P content is preferably 0.100% or less. The P content may also be 0.050% or less, 0.030% or less, or 0.010% or less.

### [S: 0.0300% or Less]

S is an element forming MnS and other nonmetallic inclusions in steel and inviting a drop in ductility of the steel part. The S content is preferably as small as possible, and therefore ideally is 0%. However, excessive reduction of the S content sometimes invites a large increase in costs. For this reason, the S content may be 0.0001% or more and may be 0.0002% or more, 0.0010% or more, or 0.0050% or more. On the other hand, if excessively including S, sometimes cracks are invited starting from the nonmetallic inclusions at the time of cold forming. Therefore, the S content is preferably 0.0300% or less. The S content may also be 0.0200% or less, 0.0150% or less, or 0.0100% or less.

### [N: 0.0100% or Less]

N is an element forming coarse nitrides in a steel sheet and lowering the workability of a steel sheet. The N content is preferably as small as possible, and therefore ideally is 0%. However, excessive reduction of the N content sometimes invites a large increase in costs. For this reason, the N content may be 0.0001% or more and may be 0.0005% or more or 0.0010% or more. On the other hand, if excessively including N, as explained above, sometimes coarse nitrides are formed and the workability of steel sheet is lowered. Therefore, the N content is preferably 0.0100% or less. The N content may also be 0.0080% or less or 0.0050% or less.

The preferable basic chemical composition of the base steel sheet is as explained above. Furthermore, the base steel sheet may, if necessary, contain one or more selected from the group consisting of O: 0 to 0.020%, Al: 0 to 1.000%, B: 0 to 0.010%, Nb: 0 to 0.150%, Ti: 0 to 0.20%, Mo: 0 to 3.00%, Cr: 0 to 2.00%, V: 0 to 1.00%, Ni: 0 to 2.00%, W: 0 to 1.00%, Ta: 0 to 0.10%, Co: 0 to 3.00%, Sn: 0 to 1.00%, Sb: 0 to 0.50%, Cu: 0 to 2.00%, As: 0 to 0.050%, Mg: 0 to 0.100%, Ca: 0 to 0.100%, Zr: 0 to 0.100%, Hf: 0 to 0.100%, and REM: 0 to 0.100% in place of the balance of Fe. The elements may be 0.0001% or more, 0.0005% or more, or 0.001% or more.

In the base steel sheet, the balance besides the above elements is comprised of Fe and impurities. The "impurities" in the base steel sheet are constituents, etc., entering due to various factors in the production process, first and foremost the ore, scrap, and other materials, when industrially producing the base steel sheet.

The chemical composition of the base steel sheet may be measured by a general analysis method. For example, the chemical composition of the base steel sheet may be measured by removing the plating layer by mechanical grinding, then using inductively coupled plasma-atomic emission spectroscopy (ICP-AES). C and S may be measured using the combustion-infrared absorption method, N may be measured using the inert gas melting-thermal conductivity method, and O may be measured by the inert gas melting-nondispersion type infrared absorption method.

### [Sheet Thickness of Base Steel Sheet]

The sheet thickness of the base steel sheet is not particularly limited, but for example is 0.2 mm or more and may also be 0.3 mm or more, 0.6 mm or more, 1.0 mm or more, or 2.0 mm or more. Similarly, the sheet thickness of the base steel sheet is, for example, 6.0 mm or less and may also be 5.0 mm or less or 4.0 mm or less.

### [Mechanical Properties of Plated Steel Sheet]

The plated steel sheet useful for use in the welded joint according to an embodiment of the present invention can have any suitable tensile strength and is not particularly limited, but for example preferably has a tensile strength of 780 MPa or more. As explained above, LME cracking remarkably occurs when spot welding a steel sheet having a relatively high strength. For this reason, if the plated steel sheet has a high tensile strength of 780 MPa or more, the effect of suppression of LME cracking becomes particularly remarkable compared with the case of conventional plated steel sheet having the same tensile strength. For example, in an embodiment of the present invention, the tensile strength of the plated steel sheet may be 980 MPa or more, 1080 MPa or more, or 1180 MPa or more. The upper limit is not particularly prescribed, but, for example, the tensile strength of the plated steel sheet may be 2300 MPa or less, 2000 MPa or less, 1800 MPa or less, or 1500 MPa or less. The tensile strength is measured by taking a JIS No. 5 test piece from an orientation at which a long direction of the test piece becomes parallel to the perpendicular direction to rolling of the plated steel sheet and conducting a tensile test based on JIS Z 2241: 2011.

### <Method of Production of Plated Steel Sheet>

Next, a preferred method of production of the plated steel sheet useful for use in a welded joint according to an embodiment of the present invention, more specifically the plated steel sheet provided with a plating layer having a ratio of the "Al concentration at center of plating layer"/"Al concentration at position of plating layer where Fe concentration is 50% of base steel sheet" when measured by glow discharge spectroscopy (GDS) of 0.10 to 1.50 will be explained. The following explanation is intended to illustrate the characteristic method for producing the plated steel sheet and is not intended to limit the plated steel sheet to one produced by the method of production such as explained below.

The plated steel sheet can, for example, be produced by performing a casting step of casting molten steel adjusted in chemical composition so as to form a steel slab, a hot rolling step of hot rolling the steel slab to obtain a hot rolled steel sheet, a coiling step of coiling the hot rolled steel sheet, a cold rolling step of cold rolling the coiled hot rolled steel sheet to obtain a cold rolled steel sheet, a pretreatment step, an annealing step of annealing the pretreated cold rolled steel sheet, and a plating step of forming a plating layer on the obtained base steel sheet. Alternatively, it is also possible to not coil the steel sheet after the hot rolling step, but perform the cold rolling step as is after pickling. Below, the steps will be explained in detail.

### [Casting Step]

The conditions of the casting step are not particularly limited. For example, the casting may be performed by smelting using a blast furnace, electric furnace, etc., followed by performing various secondary refining, then casting using the usual continuous casting, casting using the ingot method, or other method.

### [Hot Rolling Step]

The cast steel slab can be hot rolled to obtain a hot rolled steel sheet. The hot rolling step is performed by hot rolling the cast steel slab directly or by cooling once, then reheating it. If reheating, the heating temperature of the steel slab may be, for example, 1100 to 1250°C. In the hot rolling step, usually rough rolling and finish rolling are performed. The temperatures and rolling reductions of the rolling operations may be suitably determined in accordance with the desired metallographic structures and sheet thicknesses. For example, the end temperature of the finish rolling may be 900 to 1050°C and the rolling reduction of the finish rolling may be 10 to 50%.

### [Coiling Step]

The hot rolled steel sheet can be coiled at a predetermined temperature. The coiling temperature can be suitably determined in accordance with the desired metallographic structure, etc. For example, it may be 500 to 800°C. It is also possible impart predetermined heat treatment to the hot rolled steel sheet before coiling or after coiling, then uncoiling. Alternatively, the coiling step need not be performed and the steel sheet may be pickled after the hot rolling step, then subjected to the later explained cold rolling step.

### [Cold Rolling Step]

The hot rolled steel sheet can be pickled, etc., then cold rolled to obtain the cold rolled steel sheet. The rolling reduction of the cold rolling can be suitably determined in accordance with the desired metallographic structure or sheet thickness. For example, it may be 20 to 80%. After the cold rolling step, for example, the steel sheet may be air cooled to cool it down to room temperature.

### [Pretreatment Step]

Next, it is effective to subject the cold rolled steel sheet to a predetermined pretreatment step before annealing. As such a pretreatment step, degreasing and an optional grinding treatment can be included. The degreasing, for example, may include running a current through the cold rolled steel sheet in a pH8.0 or more solution (electrolysis treatment). The current density at the time of running the current may be 1.0 to 8.0A/dm². The current running time may be 5 to 10 seconds. On the other hand, the optional grinding is preferably performed using a heavy duty grinding brush. By grinding using a heavy duty grinding brush to introduce strain to the surface of the cold rolled steel sheet, formation of nuclei of the Fe-Al barrier layer is promoted at the time of the plating step after the annealing step and the Fe-Al barrier layer can be made denser. In turn, the growth rate of the Fe-Al barrier layer becomes slower, and therefore the thickness can be reduced. As a result, it is possible to reduce the amount of Al consumed for forming the Fe-Al barrier layer. Therefore, it is possible to increase the amount of Al in the plating layer other than at the Fe-Al barrier layer, and therefore in the finally obtained plated steel sheet, it is possible to raise the ratio of the "Al concentration at center of plating layer"/"Al concentration at position of plating layer where Fe concentration is 50% of base steel sheet". The grinding is not particularly limited, but, for example, it can be performed by using a heavy duty grinding brush to grind down the surface of the cold rolled steel sheet under conditions of a grinding amount of 10 to 200 g/m² . The amount of grinding by the heavy duty grinding brush can be adjusted by any suitable method known to persons skilled in the art. It is not particularly limited, but, for example, can be adjusted by suitably selecting the number of heavy duty grinding brushes, the speeds, the brush screw-in amount, the coating solution used, etc.

### [Annealing Step]

The pretreated cold rolled steel sheet is annealed. The holding temperature in the annealing step is preferably 700 to 900°C. If the holding temperature in the annealing step is more than 900°C, the steel sheet surface is formed with an external oxide layer and plateability is liable to decline. The rate of temperature rise up to the holding temperature is not particularly limited, but may be 1 to 10°C/s. The holding time at the holding temperature is preferably 10 to 300 seconds, more preferably 80 to 120 seconds. If the holding time is more than 300 seconds, external oxides excessively grow and the plateability is liable to fall. The dew point of the atmosphere in the annealing step is preferably -20 to 10°C, more preferably -10 to 5°C. If the dew point is too low, the surface of the steel sheet will be formed with an external oxide layer and the plateability will sometimes fall. On the other hand, if the dew point is too high as well, similarly the steel sheet surface will be formed with Fe oxides an external oxides and sometimes the plateability will fall. Further, the atmosphere at the annealing step may be a reducing atmosphere, more specifically a reducing atmosphere containing nitrogen and hydrogen, for example a hydrogen 1 to 10% reducing atmosphere (for example, hydrogen 4% and nitrogen balance).

### [Plating Step]

Next, in the plating step, at least one surface, preferably both surfaces, of the cold rolled steel sheet (base steel sheet) is formed with a plating layer having the chemical composition and structure explained above. More specifically, the plating step is, for example, performed by hot dip plating using a plating bath adjusted in constituents so that the chemical composition of the plating layer becomes within the range explained above. In the plating step, it is extremely important to first control the time from dipping the steel sheet in the plating bath to the start of cooling to 6 seconds or less, then control the average cooling speed from the bath temperature (for example, 420 to 480°C) down to 370°C to 20°C/s or more. By satisfying these requirements, it is possible to make the Fe-Al barrier layer thinner and reduce the amount of Al consumed for formation of the Fe-Al barrier layer and possible to reliably secure the amount of Al present in the plating layer other than at the Fe-Al barrier layer. As a result, in the finally obtained plated steel sheet, it is possible to make the ratio of the "Al concentration at center of plating layer"/"Al concentration at position of plating layer where Fe concentration is 50% of base steel sheet" 0.10 or more. On the other hand, if any of these requirements is not satisfied, i.e., if the time from starting to dip the steel sheet in the plating bath to starting cooling exceeds 6 seconds and/or the average cooling speed from the bath temperature down to 370°C is less than 20°C/s, a large amount of Al is consumed for forming the Fe-Al barrier layer and the amount of Al present in the plating layer other than at the Fe-Al barrier layer decreases. As a result, in the finally obtained plated steel sheet, the desired ratio of the "Al concentration at center of plating layer"/"Al concentration at position of plating layer where Fe concentration is 50% of base steel sheet" can no longer be obtained.

From the viewpoint of better improving the LME resistance of the welded joint, the time from dipping the steel sheet in the plating bath to the start of cooling is preferably shorter and the average cooling speed from the bath temperature down to 370°C is preferably faster. For example, by making the Al content of the plating layer as a whole 0.30% or more and by making the time from dipping the steel sheet in the plating bath to the start of cooling 4 seconds or less and the average cooling speed from the bath temperature down to 370°C 40°C/s or more, it is possible to better improve the LME resistance of the welded j oint. If performing grinding by a heavy duty grinding brush as the previously explained pretreatment step, even under conditions of the time from dipping the steel sheet in the plating bath to the start of cooling of 6 seconds or less and the average cooling speed from the bath temperature down to 370°C of 20°C/s or more, a similar higher LME resistance can be achieved by combination with the condition of the Al content of the plating layer as a whole being 0.30% or more. Alternatively, further, by making the Al content of the plating layer as a whole 0.30% or more, performing grinding by a heavy duty grinding brush as the previously explained pretreatment step, and further making the time from dipping the steel sheet in the plating bath to the start of cooling 4 seconds or less and making the average cooling speed from the bath temperature down to 370°C 40°C/s or more, it is possible to more remarkably improve the LME resistance of the welded joint. The lower limit of the time from dipping the steel sheet in the plating bath to the start of cooling is not particularly prescribed, but for example the time from dipping the steel sheet in the plating bath to the start of cooling may be 2 seconds or more. Similarly, the upper limit of the average cooling speed from the bath temperature down to 370°C is not particularly prescribed, but for example the average cooling speed from the bath temperature down to 370°C may be 80°C/s or less. The other conditions of the plating step may be suitably set considering the thickness and amount of deposition of the plating layer, etc. For example, by dipping the cold rolled steel sheet in the plating bath, then pulling it out and immediately spraying it by N₂ gas or air using the gas wiping method and then cooling it, it is possible to adjust the amount of deposition of the plating layer to within a predetermined range, for example, to within a range of 10 to 170 g/m² per surface.

In the plated steel sheet produced by the present method of production, the ratio of the "Al concentration at center of plating layer"/"Al concentration at position of plating layer where Fe concentration is 50% of base steel sheet" is controlled to within a range of 0.10 to 1.50, and therefore when used in spot welding, the structure of the initial plating layer changes at the separation part of the region up to 500 µm from the end of the pressure weld, a plating layer with a ratio of the area ratio of the η phase with respect to the total of the area ratios of the η phase and Γ phase of 10 to 100% is formed, and, in turn, it is possible to remarkably suppress or reduce the penetration of molten Zn to the inside of the steel sheet at the time of spot welding.

### [Other Steel Sheet]

As a steel sheet other than the plated steel sheet explained above of the plurality of steel sheets used in the welded joint according to an embodiment of the present invention, any suitable steel sheet or plated steel sheet can be used. Such a steel sheet may, for example, have a tensile strength of 780 MPa or more in the same way as the preferred embodiment of the plated steel sheet, or have a tensile strength of less than 780 MPa . Therefore, for the steel sheet other than the plated steel sheet explained above, a suitable steel sheet or plated steel sheet may be suitably selected in accordance with the application or desired properties of the welded joint, for example, the desired joint strength, etc.

### <Method of Production of Welded Joint>

The welded joint according to an embodiment of the present invention can be produced by applying any suitable spot welding method known to persons skilled in the art to a plurality of steel sheets obtained by using the above plated steel sheet for all of the steel sheets and stacking the same or to a plurality of steel sheets obtained by using the above plated steel sheet for one or more of the steel sheets and stacking the plated steel sheet with other steel sheets or other plated steel sheets. For example, it is possible to produce the welded joint according to an embodiment of the present invention by squeezing together the plurality of steel sheets stacked in this way using a pair of facing electrodes while running current across the electrodes under usual conditions to form a nugget and a pressure weld in its surroundings. The conditions of the spot welding may be any suitable conditions known to persons skilled in the art. For example, the welding electrodes may be dome radius type tip diameter 6 to 8 mm welding electrodes, the squeezing force may be 1.5 to 6.0 kN, the weld time may be 0.1 to 1.0 second (5 to 50 cycles, power frequency 50 Hz), the weld current may be 4 to 15 kA, and the weld angle (angle formed by axial direction of electrodes and direction perpendicular to surface of steel sheets) may be 0 to 10°.

According to the welded joint produced in the above way, the effect by addition of Al to the plating layer can be sufficiently manifested, the ratio of the η phase in the plating layer at the separation part right outside the pressure weld can be controlled to within the desired range, and, in turn, it is possible to suppress or reduce penetration of molten Zn to inside the steel sheet at the time of spot welding. Therefore, according to such a welded j oint, compared to if using a conventional plated steel sheet provided with a plating layer having a similar chemical composition, more specifically a Zn-based plating layer having a similar Al content, it is possible to realize a better LME resistance. In particular, it is possible to contribute to the development of industry through improvement of collision safety and increase of service life in use in the automobile field.

Below, examples will be used to explain the present invention in more detail, but the present invention is not limited to these examples in any way.

### EXAMPLES

In the following examples, plated steel sheets were produced under various conditions and the LME resistances of welded joints produced by spot welding the produced plated steel sheets were investigated.

### [Production of Plated Steel Sheets]

First, molten steels having chemical compositions comprised of, by mass%, C: 0.15%, Si: 1.00%, Mn: 2.60%, P: 0.010%, S: 0.0020%, N: 0.0100%, Al: 0.020%, and balances of Fe and impurities were cast by continuous casting to form steel slabs. The steel slabs were cooled once, then reheated to 1200°C for hot rolling and then were coiled at 600°C. The hot rolling was performed by rough rolling and finish rolling. The end temperature of the finish rolling was 950°C and the rolling reduction of the finish rolling was 30%. Next, the obtained hot rolled steel sheets were pickled, then were cold rolled by rolling reductions of 50% to obtain cold rolled steel sheets having sheet thicknesses of 1.6 mm. Next, the obtained cold rolled steel sheets were pretreated in a pH9.2 solution by running a current of a 5.0A/dm² current density for 8 seconds. Next, in accordance with need, each cold rolled steel sheet was coated with a 2.0% NaOH aqueous solution, then a heavy duty grinding brush (D-100 made by Hotani Co., Ltd.) was used to grind down the surface of the cold rolled steel sheet by a 10 to 200 g/m² grinding amount, a brush screw-in amount of 2.0 mm, and a speed of 600 rpm to introduce strain to the surface of the cold rolled steel sheet. The use of grinding by a heavy duty grinding brush is as shown in Table 1 for each cold rolled steel sheet.

Next, each cold rolled steel sheet was cut to a 100 mm×200 mm size, then was annealed under conditions of a dew point of 0°C, a holding temperature of 870°C, and a holding time of 100 seconds (annealing atmosphere: hydrogen 4% and nitrogen balance). In all of the steel sheet samples, the rate of temperature rise at the time of annealing was 5°C/s. Next, the cut steel sheet sample was plated using a hot dip galvanization bath having a predetermined bath composition under conditions of the bath temperature, time from dipping in plating bath to start of cooling, and average cooling speed from the bath temperature to 370°C shown in Table 1 to thereby obtain a plated steel sheet sample formed with a plating layer on both surfaces of the steel sheet sample. The amount of plating deposition was adjusted to 50 g/m² per surface by dipping in the plating bath, pulling up the steel sheet sample, and wiping by N₂ gas before starting cooling. In Comparative Example 28, alloying was performed at 520°C×10 seconds after the hot dip galvanization.

### [Tensile Strength of Plated Steel Sheet]

The tensile strength was measured by taking a JIS No. 5 test piece from an orientation at which a long direction of the test piece becomes parallel to perpendicular direction to rolling of the plated steel sheet sample and conducting a tensile test based on JIS Z 2241: 2011. As a result, in all of the plated steel sheet samples, the tensile strength was 780 MPa or more.

### [Measurement of Al Concentration Distribution in Plating Layer]

First, a plated steel sheet sample was cut to a 50 mm×50 mm size. Next, the cut plated steel sheet sample was measured by GDS to thereby obtain the Al concentration distribution from the surface of the plating layer down to 100 µm in the depth direction. Next, the Al concentration measured by GDS at the depth position where the Fe intensity became 50% of the Fe intensity of the base steel sheet (Fe intensity at depth 100 µm position from surface of plating layer of sample) was determined as the "Al concentration at the position of plating layer where Fe concentration is 50% of base steel sheet". The distance from this depth position up to the surface was defined as the thickness of the plating layer. The Al concentration obtained by GDS at the 1/2 position of the thickness of the plating layer was determined as the "Al concentration at center of plating layer". Finally, the ratio of the "Al concentration at center of plating layer"/"Al concentration at position of plating layer where Fe concentration is 50% of base steel sheet" was determined. As a result, in the plated steel sheet samples of all of the examples (invention examples), the ratio of the "Al concentration at center of plating layer"/"Al concentration at position of plating layer where Fe concentration is 50% of base steel sheet" was controlled to a range of 0.10 to 1.50.

### [Production of Welded Joint]

Among the obtained plated steel sheet samples, 100×100 mm size plated steel sheet samples were subjected to spot welding. These were cut to 50 mm×100 mm sizes to prepare two sheets. Each two plated steel sheet samples were spot welded using dome radius type tip diameter 8 mm welding electrodes, weld angle of 5°, squeezing force of 4.0 kN, weld time of 0.5 second, and weld current of 9 kA to produce a welded joint.

### [Analysis of Chemical Composition of Plating Layer]

The chemical composition of the plating layer was determined by dipping a 30 mm×30 mm sample taken from the separation part at the outside of the heat affected zone of a welded joint in a 10% HCl aqueous solution containing an inhibitor (Asahi Chemical Co., Ltd., Ibit), peeling off the plating layer by pickling, then measuring the plating constituents dissolved in the aqueous solution by ICP spectroscopy. The results are shown in Table 1.

### [Measurement of Ratio of Area Ratio of η Phase at Plating Layer of Separation Part]

The ratio of the η phase at the separation part of the region up to 500 µm from the end of the pressure weld was determined as follows: First, a cross-sectional sample of the spot weld was prepared, then a BSE image including the end of the pressure weld was obtained by SEM-EPMA and the end of the pressure weld of the spot weld and a region up to 500 µm from the end of the pressure weld toward the separation part (boundary part of pressure weld and separation part) were identified from the BSE image. Next, elemental analysis was conducted at the identified boundary part and the area ratio of the η phase and the area ratio of the Γ phase at the boundary part were identified. Specifically, the η phase was the phase where the Zn concentration was 97 atm% or more, the Fe concentration was 3 atm% or less, and the other impurities were 3 atm% or less and the Γ phase was the phase where the Zn concentration was 87 atm% or more, the Fe concentration was 8 to 13 atm% and the other impurities were 3 atm% or less. The field of the SEM image was 100 µm×100 µm. Similar elemental analysis was conducted for five different locations at the boundary part and the ratio of the area ratio of the η phase to the total of the area ratios of the η phase and Γ phase at each field was found. Finally, these were averaged to determine the ratio of the area ratio of the η phase to the total of the area ratios of the η phase and Γ phase. In relation to this, in the welded joints of all examples (invention examples), the total of the area ratios of the η phase and Γ phase at the separation parts of the region up to 500 µm from the end of the pressure weld was 80% or more.

### [Evaluation of LME Resistance]

The weld of a produced welded joint was polished in cross-section, then examined under an optical microscope, measured for length of LME cracking occurring at the cross-section of the separation part around the pressure weld, and evaluated for LME resistance as follows:
AAA: no LME cracking,
AA: LME cracking length of more than 0 µm to 100 µm,
A: LME cracking length of more than 100 µm to 500 µm,
B: LME cracking length of more than 500 µm

### [Evaluation of Weld Corrosion Resistance]

The produced welded joint was subjected to chemical conversion and electrodeposition coating, used for a combined cyclic corrosion test according to JASO (M609-91), and evaluated for corrosion resistance of a spot weld by the state of corrosion of the steel material. Each evaluation use sample was evaluated for weld corrosion resistance by the following evaluation criteria after the end of the corrosion resistance test in accordance with the state of corrosion of the spot weld based on the cycles at which red rust occurred:
AAA: no red rust occurring in more than 240 to 360 cycles
AA: no red rust occurring in more than 180 to 240 cycles
A: no red rust occurring in more than 90 to 180 cycles
B: red rust occurring in 90 cycles

The cases where the LME resistances were evaluated as AAA, AA, and A were evaluated as welded j oints enabling suppression or reduction of the occurrence of LME cracking at the time of spot welding. The results are shown in the following Table 1.

### [Table 1]

**Table 1**

| No. | Class | Chemical composition of plating layer at outside of heat affected zone (mass%) | | | | | Production conditions of plated steel sheet | | | | Ratio of η phase area ratio right outside pressure weld (%) | LME resistance | Weld corrosion resistance |
|---|---|---|---|---|---|---|---|---|---|---|---|---|---|
| | | Zn | Al | Fe | Others | | Grinding (heavy duty grinding brush) | Bath temp. | Time from dipping in plating bath to start of cooling (s) | Average cooling speed from bath temp.to 370°C (°C/s) | | | |
| | | | | | Element | (mass%) | | | | | | | |
| 1 | Ex. | Bal. | 0.10 | 0.30 | B | 0.001 | No | 450 | 6 | 20 | 10 | A | A |
| 2 | Ex. | Bal. | 0.25 | 0.40 | Ce | 0.002 | No | 450 | 6 | 20 | 14 | A | A |
| 3 | Ex. | Bal. | 0.30 | 0.40 | Sr | 0.001 | Yes | 440 | 6 | 20 | 25 | AA | AA |
| 4 | Ex. | Bal. | 0.45 | 1.50 | Si | 0.001 | Yes | 440 | 6 | 20 | 28 | AA | AA |
| 5 | Ex. | Bal. | 0.50 | 0.30 | Pb | 0.002 | Yes | 440 | 6 | 20 | 35 | AA | AA |
| 6 | Ex. | Bal. | 0.50 | 0.20 | Ni | 0.010 | Yes | 440 | 4 | 40 | 40 | AAA | AAA |
| 7 | Ex. | Bal. | 0.50 | 0.30 | Sb | 0.002 | Yes | 440 | 4 | 40 | 41 | AAA | AAA |
| 8 | Ex. | Bal. | 0.55 | 0.50 | Cu | 0.004 | Yes | 440 | 4 | 40 | 45 | AAA | AAA |
| 9 | Ex. | Bal. | 0.55 | 0.50 | Mg | 0.001 | Yes | 440 | 4 | 40 | 48 | AAA | AAA |
| 10 | Ex. | Bal. | 0.55 | 0.70 | La | 0.0001 | Yes | 440 | 4 | 40 | 55 | AAA | AAA |
| 11 | Ex. | Bal. | 0.55 | 0.70 | Nb | 0.001 | Yes | 440 | 4 | 40 | 59 | AAA | AAA |
| 12 | Ex. | Bal. | 0.60 | 0.40 | Pb | 0.002 | Yes | 440 | 4 | 40 | 63 | AAA | AAA |
| 13 | Ex. | Bal. | 0.60 | 0.50 | Sn | 0.001 | Yes | 440 | 4 | 40 | 64 | AAA | AAA |
| 14 | Ex. | Bal. | 0.60 | 0.50 | Ca | 0.002 | Yes | 440 | 4 | 40 | 67 | AAA | AAA |
| 15 | Ex. | Bal. | 0.60 | 0.50 | P | 0.003 | Yes | 440 | 4 | 40 | 67 | AAA | AAA |
| 16 | Ex. | Bal. | 0.70 | 0.40 | | | No | 440 | 4 | 40 | 38 | AA | AA |
| 17 | Ex. | Bal. | 0.80 | 0.50 | Ti | 0.010 | Yes | 440 | 4 | 40 | 74 | AAA | AAA |
| 18 | Ex. | Bal. | 0.10 | 2.00 | Cr | 0.002 | No | 460 | 6 | 20 | 24 | A | A |
| 19 | Ex. | Bal. | 0.90 | 0.10 | Ag | 0.002 | Yes | 430 | 4 | 40 | 81 | AAA | AAA |
| 20 | Ex. | Bal. | 1.00 | 0.40 | Zr | 0.001 | Yes | 430 | 4 | 40 | 81 | AAA | AAA |
| 21 | Ex. | Bal. | 1.10 | 0.20 | Mn | 0.002 | Yes | 430 | 4 | 40 | 83 | AAA | AAA |
| 22 | Ex. | Bal. | 1.20 | 0.50 | Mo | 0.001 | Yes | 430 | 4 | 40 | 83 | AAA | AAA |
| 23 | Ex. | Bal. | 1.30 | 0.40 | | | Yes | 430 | 4 | 40 | 85 | AAA | AAA |
| 24 | Ex. | Bal. | 1.40 | 0.50 | Li | 0.010 | Yes | 430 | 4 | 40 | 89 | AAA | AAA |
| 25 | Ex. | Bal. | 1.50 | 0.60 | Y | 0.002 | Yes | 430 | 4 | 40 | 100 | AAA | AAA |
| 26 | Comp. ex. | Bal. | 0.08 | 0.70 | | | No | 450 | 6 | 20 | 0 | B | B |
| 27 | Comp. ex. | Bal. | 1.60 | 0.50 | | | No | 450 | 6 | 20 | 36 | B | AA |
| 28 | Comp. ex. | Bal. | 0.50 | 2.50 | | | No | 450 | 6 | 20 | 0 | B | B |
| 29 | Comp. ex. | Bal. | 0.30 | 0.20 | | | No | 450 | 8 | 20 | 3 | B | B |
| 30 | Comp. ex. | Bal. | 0.40 | 0.50 | | | No | 450 | 6 | 10 | 2 | B | B |

| | | | | | | | | | | | | | |
|---|---|---|---|---|---|---|---|---|---|---|---|---|---|
| Underlines indicate outside scope of present invention or production conditions off from preferable range. | | | | | | | | | | | | | |

Referring to Table 1, in Comparative Example 26, the Al content in the plating layer was low, and therefore it was not possible to sufficiently obtain the effect of suppression of LME cracking by Al addition and the LME resistance fell. In Comparative Example 27, the Al content in the plating layer was high, and therefore it is believed that the melting point of the plating layer fell. As a result, the Zn in the plating layer easily melted at the time of spot welding and the LME resistance fell. In Comparative Example 28, the Fe content in the plating layer became higher due to the heat treatment for alloying, the desired plating chemical composition could not be obtained, and the ratio of the "Al concentration at center of plating layer"/"Al concentration at position of plating layer where Fe concentration is 50% of base steel sheet" became less than 0.10. In turn, the ratio of the area ratio of the η phase in the plating layer right outside the pressure weld became 0%. In Comparative Example 28, the desired ratio of the "Al concentration at center of plating layer"/"Al concentration at position of plating layer where Fe concentration is 50% of base steel sheet" was not obtained, and therefore it is believed that it was not possible to suppress or reduce direct contact between the molten Zn and base steel sheet at the time of spot welding by the Al in the plating layer and alloying of Zn in the plating layer was promoted. Further, as a result, the LME resistance fell. In Comparative Example 29, the time from when dipping in the plating bath to when starting cooling was long, and therefore it is believed that a large amount of Al was consumed for formation of the Fe-Al barrier layer and the amount of Al in the plating layer other than the Fe-Al barrier layer fell. As a result, the ratio of the "Al concentration at center of plating layer"/"Al concentration at position of plating layer where Fe concentration is 50% of base steel sheet" became less than 0.10. For reasons similar to the case of Comparative Example 28, the ratio of the area ratio of the η phase in the plating layer right outside the pressure weld fell and the LME resistance fell. In Comparative Example 30, the average speed from the bath temperature to 370°C was slow, and therefore it is believed that a large amount of Al was consumed for formation of the Fe-Al barrier layer and the amount of Al in the plating layer other than the Fe-Al barrier layer fell. As a result, the ratio of the "Al concentration at center of plating layer"/"Al concentration at position of plating layer where Fe concentration is 50% of base steel sheet" became less than 0.10. For reasons similar to the case of Comparative Examples 28 and 29, the ratio of the area ratio of the η phase in the plating layer right outside the pressure weld fell and the LME resistance fell. Further, in Comparative Examples 26 and 28 to 30 where the ratio of the area ratio of the η phase in the plating layer right outside the pressure weld was low, the ratio of the η phase mainly comprised of Zn was low, so the corrosion resistance of the weld fell.

In contrast to this, the welded joints according to all of the examples have the predetermined plating chemical compositions and have ratios of the area ratio of the η phase at the plating layer right outside the pressure weld controlled to a range of 10 to 100%, whereby the effect due to addition of Al to the plating layer is sufficiently manifested and LME cracking can be reliably suppressed or reduced. Furthermore, the ratios of the η phase mainly comprised of Zn were high, and therefore the corrosion resistances of the welds were also improved. In particular, in each of Examples 3 to 5 where the Al content of the plating layer as a whole was 0.30% or more and grinding was performed by a heavy duty grinding brush as pretreatment of the annealing step (however, time from dipping steel sheet in plating bath to when starting cooling of 6 seconds and average cooling speed from bath temperature to 370°C of 20°C/s) and in Example 16 where the Al content of the plating layer as a whole was 0.30% or more, the time from dipping the steel sheet in the plating bath to when starting cooling was 4 seconds, the average cooling speed from bath temperature to 370°C was 40°C/s (no grinding by heavy duty grinding brush), the ratio of the area ratio of the η phase at the plating layer right outside of the pressure weld became 25% or more. As a result, the LME resistance and corrosion resistance of the weld were evaluated as AA and further the LME resistance and the corrosion resistance of the weld were improved. In addition, in each of Examples 6 to 15, 17, and 19 to 25 where the Al content of the plating layer as a whole was 0.30% or more, grinding was performed by a heavy duty grinding brush as pretreatment of the annealing step, and further the time from when dipping the steel sheet in the plating bath to when starting cooling was 4 seconds and the average cooling speed from the bath temperature to 370°C was 40°C/s, the ratio of the area ratio of the η phase at the plating layer right outside of the pressure weld became 40% or more and, as a result, the LME resistance and the corrosion resistance of the weld were evaluated as AAA and further the LME resistance and the corrosion resistance of the weld were improved.

### REFERENCE SIGNS

1 welded joint
11 steel sheet
12 nugget
13 pressure weld
14 pressure weld end
15 heat affected zone
16 spot weld
17 separation part
18 plating layer

## Claims

1. A welded joint comprising
a plurality of steel sheets stacked together,
a spot weld having a nugget joining the plurality of steel sheets, and a pressure weld and heat affected zone formed around the nugget, and
a separation part positioned around the pressure weld, wherein
one or more of the plurality of steel sheets is a plated steel sheet comprising a base steel sheet and a plating layer formed on at least a surface corresponding to a stacking surface of the plurality of steel sheets of surfaces of the base steel sheet,
the plating layer at the separation part at an outside of the heat affected zone has a chemical composition comprising, by mass%,
Al: 0.10 to 1.50% and
Fe: 0.01 to 2.00%,
further comprising at least one of:
Mg: 0 to 1.500%,
Si: 0 to 1.000%,
Ni: 0 to 1.000%,
Ca: 0 to 4.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
P: 0 to 0.500%, and
Sr: 0 to 0.500% in a total of 5.000% or less, and
a balance of Zn and impurities, and
at the plating layer of the separation part of a region up to 500 µm from an end of the pressure weld, a ratio of an area ratio of an η phase with respect to a total of area ratios of the η phase and Γ phase is 10 to 100%.

2. The welded joint according to claim 1, wherein the chemical composition comprises, by mass%, Al: 0.30 to 1.50% and, at the plating layer of the separation part of the region up to 500 µm from the end of the pressure weld, the ratio of the area ratio of the η phase with respect to the total of the area ratios of the η phase and Γ phase is 25 to 100%.

3. The welded joint according to claim 1, wherein the chemical composition comprises, by mass%, Al: 0.30 to 1.50% and, at the plating layer of the separation part of the region up to 500 µm from the end of the pressure weld, the ratio of the area ratio of the η phase with respect to the total of the area ratios of the η phase and Γ phase is 40 to 100%.

4. The welded joint according to any one of claims 1 to 3, wherein the plating layer is a hot dip galvanized (GI) layer.

5. The welded joint according to any one of claims 1 to 4, wherein the plated steel sheet has a tensile strength of 780 MPa or more.
